Europäisches Patentamt

European Patent Office

Office européen des brevets

(11) Publication number: **0 418 803 A1**

# EUROPEAN PATENT APPLICATION

(21) Application number: **90117909.3**

(22) Date of filing: **18.09.90**

(51) Int. Cl.5: **C01B 17/04**

(30) Priority: **19.09.89 US 410189**

(43) Date of publication of application:
**27.03.91 Bulletin 91/13**

(84) Designated Contracting States:
**AT BE CH DE DK ES FR GB GR IT LI LU NL SE**

(71) Applicant: **PHILLIPS PETROLEUM COMPANY**
**5th and Keeler**
**Bartlesville Oklahoma 74004(US)**

(72) Inventor: **Stamper, Kenneth Royce**
**1222 Meadow Lane**
**Bartlesville, OK 74006(US)**
Inventor: **Skinner, Richard Donald**
**2125 Hampden Road**
**Bartlesville, OK 74006(US)**

(74) Representative: **Dost, Wolfgang,**
**Dr.rer.nat.,Dipl.-Chem. et al**
**Patent- & Rechtsanwälte Bardehle .**
**Pagenberg . Dost . Altenburg . Frohwitter .**
**Geissler & Partner Galileiplatz 1 Postfach 86**
**06 20**
**W-8000 München 86(DE)**

(54) **Sulfur recovery process.**

(57) A process for the recovery of sulfur from a gas containing $H_2S$ is disclosed wherein the gas is reacted in the gaseous phase with at least one oxygen-containing gas selected from the group consisting of air, molecular oxygen, and $SO_2$ under suitable reaction conditions to produce sulfur and an effluent gas comprising $H_2S$, $SO_2$ and steam, wherein the molar ratio of $H_2S$ to $SO_2$ in the effluent gas is in excess of about 20:1. In accordance with the invention, the amount of the oxygen-containing gas reacted with the acid gas is carefully controlled to insure an initial molar ratio within the reaction of $H_2S$ to $SO_2$ in excess of 2:1.

EP 0 418 803 A1

## SULFUR RECOVERY PROCESS

This invention relates to an improved process for recovering sulfur from a gas containing $H_2S$. More particularly, this invention relates to an improved process for recovering sulfur from a gas containing $H_2S$ wherein substantially all sulfur-containing constituents are removed from the gas in an efficient, more economic manner, thereby resulting in a tail gas that is environmentally acceptable for release into the atmosphere.

Although various processes for removing sulfur from a gas containing $H_2S$ are known in the art, the primary process used commercially for the recovery of elemental sulfur from $H_2S$ is the Claus process and modifications thereof. Due primarily to high recovery efficiencies and favorable comparative economics, the Claus process has long been recognized as the premiere commercial sulfur removal process. In the Claus process, one-third of the $H_2S$ contained within the feed gas is burned to form $SO_2$. The thus formed $SO_2$ is then reacted over a catalyst with the remaining two-thirds of the $H_2S$ contained within the feed gas to yield elemental sulfur. By repeatedly carrying out this reaction in a multiplicity of catalytic conversion zones, the Claus process is typically able to achieve recovery values within the range of about 80 percent to about 96 percent, depending upon the concentration of $H_2S$ in the feed gas. However, to achieve higher recovery values, which are desirable in view of current environmental standards, the number of catalytic conversion zones being utilized in the Claus process must be increased to an economically undesirable level. Thus, the Claus process is typically combined with at least one of various absorbents of sulfur-containing compounds that may be used to reduce the sulfur content of the tail gas exiting the Claus process to such levels as are environmentally acceptable. Although such combined processes are known to be effective in the recovery of sulfur from a gas containing $H_2S$, it is always desirable in view of the economics involved to make improvements upon the efficiencies and mechanisms of the primary Claus process.

It is thus an object of the present invention to provide an improved process for recovering sulfur from a gas containing $H_2S$. It is a further object of the present invention to provide such a process wherein the sulfur content of the tail gas emitted from sulfur recovery units operated in the gaseous phase is reduced to environmentally acceptable levels.

In accordance with the present invention, a gas containing $H_2S$ is introduced into a sulfur recovery unit wherein it is reacted in the gaseous phase with at least one oxygen-containing gas selected from the group consisting of air, molecular oxygen, and $SO_2$ to produce sulfur. The amount of the oxygen-containing gas introduced into the sulfur recovery unit is carefully controlled to insure that the initial molar ratio of $H_2S:SO_2$ within the sulfur recovery unit is maintained at a level in excess of 2:1. The term "initial molar ratio of $H_2S:SO_2$" as used herein is intended to account for the amount of air or molecular oxygen that is introduced into the sulfur recovery unit as well as any amount of $SO_2$ that might be introduced therein. Thus, the term "initial molar ratio of $H_2S:SO_2$" may be defined as the total number of moles of reduced sulfur components ($H_2S$, $CS_2$, $COS$, $CH_3SH$, etc. -expressed in terms of $H_2S$) minus two-thirds of the total number of moles of oxygen (introduced in the form of air or molecular oxygen) divided by the sum of the total number of moles of $SO_2$ plus two-thirds of the total number of moles of oxygen (introduced in the form of air or molecular oxygen). This relationship may be expressed as follows:

$$\text{Initial } H_2S:SO_2 \text{ ratio} = x - \frac{z}{1.5} \; : \; y + \frac{z}{1.5} \quad \text{(Formula I)}$$

wherein: x = # of moles of $H_2S$ introduced;
y = # of moles of $SO_2$ introduced; and,
z = # of moles of $O_2$ introduced.

Carefully controlling the molar ratio of $H_2S:SO_2$ in this manner insures, under the proper reaction conditions, that substantially all of the $SO_2$ within the sulfur recovery unit is reacted with $H_2S$ to produce sulfur. Thus, the sulfur compounds contained within the tail gas emitted from the sulfur recovery unit are primarily in the form of $H_2S$, which may be subsequently removed by contacting the tail gas with a regenerable, $H_2S$-selective absorbent. After contacting the regenerable, $H_2S$-selective absorbent, the tail gas is substantially free of all sulfur-containing compounds and, thus, may be released to the atmosphere in accordance with environmental standards. In accordance with one embodiment of the present invention, the regenerable, $H_2S$ absorbent, when sulfided to such a point as to be ineffective in the absorption of $H_2S$, is contacted with a molecular oxygen-containing gas, thereby regenerating the absorbent material and producing a $SO_2$-

containing effluent gas which may be recycled to the sulfur recovery unit to provide the $SO_2$ required in the primary Claus reaction. By operating the sulfur recovery process in the above-described manner several desirable benefits and efficiencies are realized.

Other objects and advantages of the invention will be apparent from the foregoing description of the invention and the appended claims as well as from the detailed description of the invention which follows.

FIGURE 1 is a schematic illustration of sulfur recovery unit utilizing one embodiment of the present invention.

FIGURE 2 is a schematic illustration of a sulfur recovery unit utilizing a second embodiment of the present invention.

FIGURE 3 is a schematic illustration of a sulfur recovery unit pilot plant.

FIGURE 4 is a graph of sulfur recovery efficiency vs. reaction temperature that illustrates the benefits achieved with the present invention.

In accordance with the present invention, a gas containing $H_2S$ is reacted with at least one oxygen-containing gas selected from the group consisting of air, molecular oxygen, and $SO_2$ to produce sulfur. The types of reactions involved in the present invention include both the well-known Claus reaction, wherein $H_2S$ is reacted with $SO_2$ to form sulfur and water, and the direct oxidation of $H_2S$, wherein $H_2S$ is directly oxidized to form sulfur and water. The amount of the oxygen-containing gas utilized in these reactions is carefully controlled to insure an initial molar ratio of the reactants of $H_2S$ to $SO_2$ in excess of 2:1. In this regard it is noted that the molar ratio of $H_2S$ to $SO_2$ steadily increases throughout the Claus reaction due to the excess amount of $H_2S$ that is present within the reactants; thus, the term "initial molar ratio" as used herein is intended to mean the molar ratio at which the reactants are initially present. Carefully controlling the initial molar ratio of $H_2S$ to $SO_2$ in this manner makes it possible, under the proper reaction conditions, to react substantially all of the $SO_2$ contained within the reaction gases, thereby created an effluent gas in which substantially all of the sulfur contained therein is in the form of reduced sulfur compounds (primarily $H_2S$) which may be removed through contact with a reduced sulfur-selective absorbent. Operating the sulfur recovery process in this manner provides for the removal of substantially all of the sulfur compounds contained within the feed gas without the need for a multi-stage secondary recovery process or a tail gas incinerator, thereby decreasing both the operating costs and the capital costs of the sulfur recovery process. Furthermore, the inventive method also makes it possible to operate in a higher temperature range while increasing the overall efficiency of the sulfur recovery process. This, in turn, permits the use of smaller catalyst beds, due to the corresponding higher reaction rates, thus further reducing the overall capital cost of the sulfur recovery process.

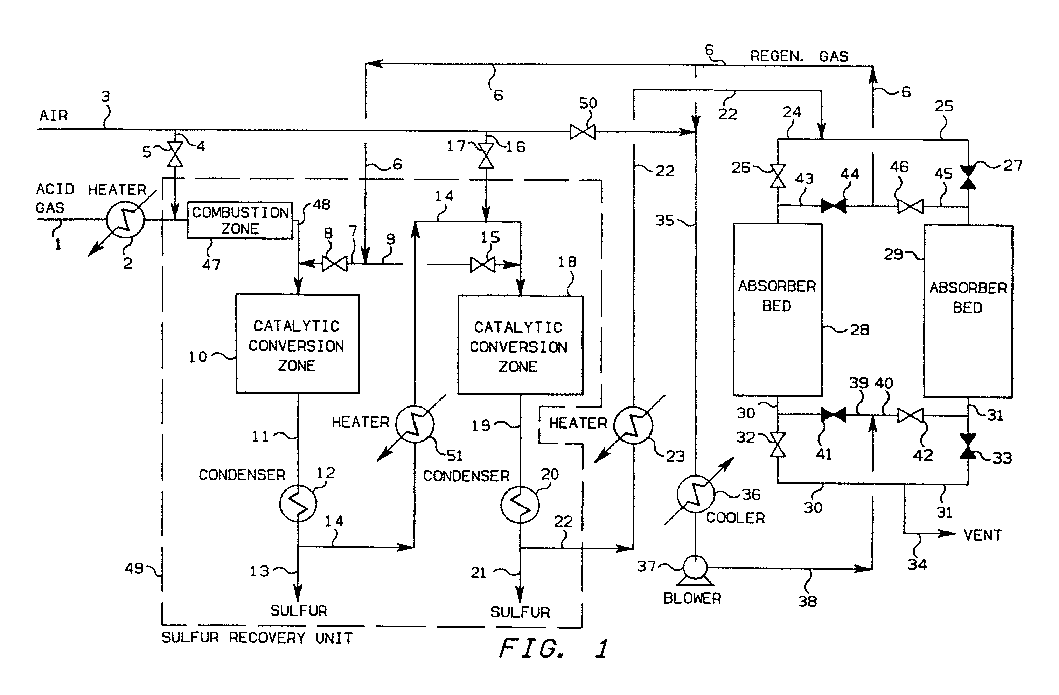

In accordance with one embodiment of the present invention, as illustrated in Figure 1, a gas containing $H_2S$ is introduced via line 1 into the combustion zone 47 of a sulfur removal unit 49. The type of combustion zone 47 and the conditions under which it is operated are well known in the art and, therefore, will not be further described herein. In the combustion zone 47, a portion of the gas containing $H_2S$ is burned with oxygen, which is generally provided in the form of air via line 4, to produce at least a portion of the $SO_2$ that is employed in the known Claus reaction. In accordance with the present invention, however, the Claus reaction is run off-ratio and, thus, the amount of oxygen introduced into the combustion zone 47 is determined by the molar ratio of $H_2S$ to $SO_2$ that is desired for the gaseous stream passing from the combustion zone via line 48. In determining the molar ratio of $H_2S$ to $SO_2$ that is desired for the gaseous stream passing from the combustion zone 47, the presence or absence of additional $SO_2$, which may be added to the sulfur recovery unit 49 via line 6, must be taken into consideration. In accordance with the present invention, the Claus reaction will typically be carried out at an initial molar ratio of $H_2S$ to $SO_2$ slightly in excess of 2:1. Thus, the amount of oxygen introduced into the combustion zone 47 will generally be less than that amount required for combustion with one-third of the amount of $H_2S$ contained within the acid gas; how much less than that amount, however, will depend upon the amount of additional $SO_2$ being introduced into the sulfur recovery unit 49 via line 6. The amount of oxygen introduced into the combustion zone 47 via line 4 is controlled by manipulating valve 5. The gaseous stream produced from the combustion zone 47, primarily containing $H_2S$, $SO_2$, and water vapor, is then passed via line 48 to the catalytic conversion zones 10 and 18. Although the embodiment of the present invention illustrated in Figure 1 is shown as having two catalytic conversion zones each in turn followed by a sulfur condenser, it is to be understood that the sulfur recovery unit of the present invention is not to be limited to the particular illustrated embodiment; instead, the sulfur recovery unit of the present invention may include all conventional treatment equipment including, but not limited to, one or more burners, a waste heat boiler, and one or more catalytic conversion zones each in turn followed by a sulfur condenser.

The gaseous stream passing from the combustion zone 47 via line 48 comprises $H_2S$ and $SO_2$ in a molar ratio in excess of 2:1. Operating the Claus reaction off-ratio in this manner assists in driving the reaction to completion and, thus, results in a greater amount of the $SO_2$ contained within the gaseous stream being reacted. An excessive amount of unreacted $H_2S$, however, greatly reduces the absorbers cycle time and shortens the life of the reduced-sulfur absorbent. Thus, these considerations must be balanced when determining how far off-ratio to run the Claus reaction. Generally, it is desirable to maintain the molar ratio of $H_2S$ to $SO_2$ as near to the stochiometric 2:1 ratio as possible, thereby reducing the amount of excess hydrogen sulfide that must be processed downstream, while utilizing a molar ratio that is sufficiently off-ratio, when combined with the desired reaction conditions, to drive the Claus reaction to practical completion. Thus, the molar ratio of $H_2S$ to $SO_2$ within the gaseous stream exiting the combustion zone 47 via line 48 will typically be within the range of about 2.05:1 to about 2.5:1, and will preferably be within the range of about 2.1:1 to about 2.4:1, depending in part upon the concentration of $H_2S$ in the feed gas being processed.

In the catalytic conversion zones 10 and 18, the gaseous stream exiting the combustion zone 47 via line 48 is reacted under suitable reaction conditions to produce an effluent gas stream having a molar ratio of $H_2S$ to $SO_2$ in excess of about 20:1. This effluent gas stream exits the sulfur recovery unit 49 via line 22. The catalytic conversion zones may contain any high surface area materials that will, under suitable reaction conditions, catalyze the reaction between $H_2S$, $SO_2$, and oxygen to produce sulfur and water vapor. These materials are well known in the art and are commercially available. A few examples of suitable catalytic materials include titanium oxide, alumina, silica, zirconia, and combinations thereof, either alone or in combination with promoting metals such as vanadium, bismuth, and nickel. Preferred catalytic materials include alumina and titanium oxide.

The reaction conditions under which $H_2S$, $SO_2$, and oxygen are reacted within the catalytic conversion zones 10 and 18 to produce the desired effluent gas stream will vary depending upon the molar ratio of $H_2S$ to $SO_2$ in the gaseous stream exiting the combustion zone 48. Generally, suitable reaction conditions are those conditions required to produce an effluent gas stream having a molar ratio of $H_2S$ to $SO_2$ in excess of about 20:1. Typically such reaction conditions will include a reaction temperature within the range of about 300°F to about 1200°F, preferably within the range of about 400°F to about 900°F; a reaction pressure within the range of about 0 psig to about 30 psig, preferably within the range of about 2 psig to about 15 psig; and a gas hourly space volume (GHSV) within the range of about 200 $hr^{-1}$ to about 10,000 $hr^{-1}$, preferably within the range of about 750 $hr^{-1}$ to about 4,000 $hr^{-1}$.

After being reacted in the catalytic conversion zones 10 and 18 under suitable reaction conditions, the effluent gas stream will primarily comprise $H_2S$ and $SO_2$ in a molar ratio in excess of about 20:1. When operating the inventive process under the most economically desirable reaction conditions, the molar ratio of $H_2S$ to $SO_2$ in the effluent gas stream will typically be greater than about 20:1, and will more preferably be in excess of about 50:1. In this regard it is noted that as the $SO_2$ concentration in the effluent gas stream approaches zero, this ratio approaches infinity. The amount of $SO_2$ contained within the effluent gas stream will generally be less than 2000 ppm, and will more preferably be less than 200 ppm. Thus, the level of $SO_2$ contained within the effluent gas stream is generally sufficiently low as to allow the $SO_2$ contained therein to be released to the atmosphere in full compliance with current environmental standards without further removal thereof being required.

Liquid sulfur from the condensers 12 and 20 that follow each of the catalytic conversion zones 10 and 18 is withdrawn from the sulfur recovery unit 49 via lines 13 and 21. The condensers 12 and 20 are generally maintained at a temperature within the range of about 250°F to about 360°F, and are preferably maintained at a temperature within the range of about 250°F to about 290°F. The effluent gas stream, primarily comprising $H_2S$ and $SO_2$ in a molar ratio in excess of 20:1, is withdrawn from the sulfur recovery plant 49 via line 22.

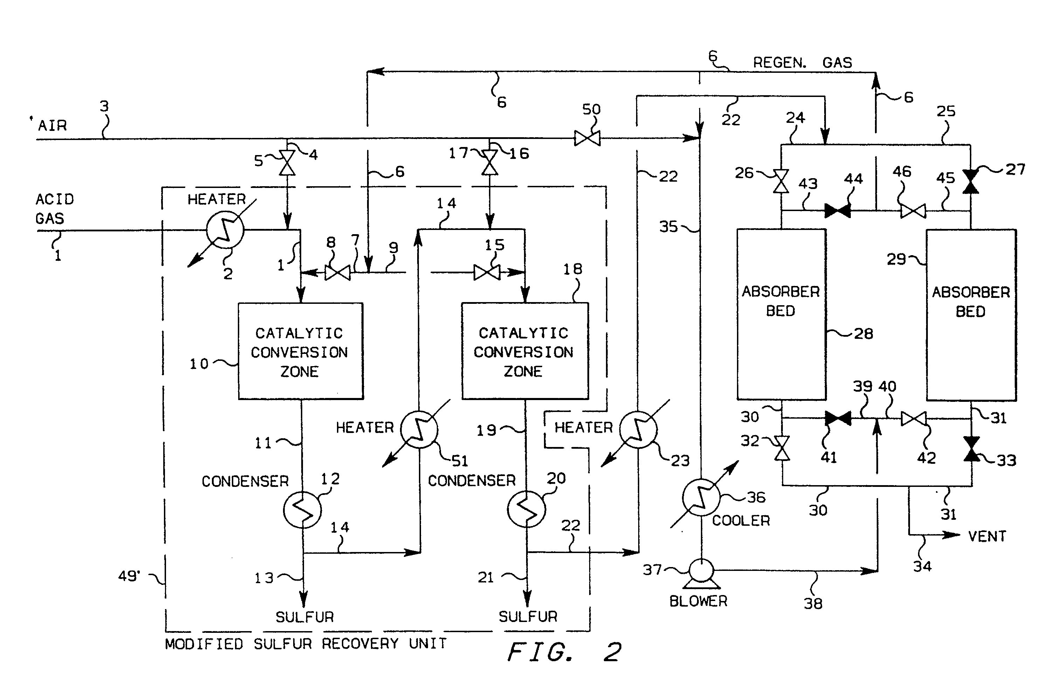

In accordance with a second embodiment of the present invention, as illustrated in Figure 2, a gas containing $H_2S$ is introduced via line 1 into catalytic conversion zones 10 and 18 contained within a modified sulfur recovery unit 49', wherein the gas is directly reacted in the gaseous phase with at least one oxygen-containing gas selected from the group consisting of air, molecular oxygen, and $SO_2$ to produce sulfur and water vapor. As used herein, the phrase "modified sulfur recovery unit" is intended to define a typical sulfur recovery unit that has been modified to not include the use of a burner for the conversion to $SO_2$ of at least a portion of the $H_2S$ contained within the feed gas. The amounts of the various oxygen-containing gases added to the catalytic conversion zones 10 and 18 via lines 4, 7, 9 and 16 are determined by the initial molar ratio of $H_2S$ to $SO_2$ that is desired for the Claus reaction. As previously discussed herein, under the present invention the Claus reaction will typically be carried out at an initial molar ratio of $H_2S$ to $SO_2$ slightly in excess of 2:1; thus, the amounts of the various oxygen-containing gases introduced into the catalytic conversion zones 10 and 18 will generally be those amounts required to insure that the $H_2S$ and $SO_2$ present within the catalytic conversion zones 10 and 18 are present in a molar ratio slightly in

4

excess of 2:1. With regard to this ratio, it is again noted that the term "initial molar ratio of $H_2S$ to $SO_2$" as used herein is intended to account for the amount of air or molecular oxygen that is introduced into the catalytic conversion zones and is thus represented by Formula I, as set forth hereinbefore.

In the catalytic conversion zones 10 and 18, the gas containing $H_2S$ is reacted with at least one oxygen-containing gas selected from the group consisting of air, molecular oxygen, and $SO_2$ under suitable reaction conditions to produce an effluent gas stream having a molar ratio of $H_2S$ to $SO_2$ in excess of about 20:1. As previously stated with regard to the prior embodiment of the present invention, the catalytic conversion zones 10 and 18 may contain any high surface area materials that will, under suitable reaction conditions, catalyze the reaction between $H_2S$, $SO_2$, and oxygen to produce sulfur and water vapor. These materials are well known in the art and are commercially available. A few examples of suitable catalytic materials include titanium oxide, alumina, silica, zirconia, and combinations thereof, either alone or in combination with promoting metals such as vanadium, bismuth, and nickel. Preferred catalytic materials include alumina and titanium oxide.

The conditions under which $H_2S$ and at least one oxygen-containing gas selected from the group consisting of air, molecular oxygen, and $SO_2$ are reacted to produce the desired effluent gas stream will vary depending upon the initial molar ratio of $H_2S$ to $SO_2$, as previously discussed above. Generally, suitable reaction conditions are those conditions required to produce an effluent gas stream having a molar ratio of $H_2S$ to $SO_2$ in excess of about 20:1. Typically such reaction conditions will include a reaction temperature within the range of about $300°F$ to about $1200°F$, preferably within the range of about $400°F$ to about $900°F$; a reaction pressure within the range of about 0 psig to about 30 psig, preferably within the range of about 2 psig to about 15 psig; and a gas hourly space velocity in the range of about 200 $hr^{-1}$ to about 10,000 $hr^{-1}$, preferably within the range of about 750 $hr^{-1}$ to about 4000 $hr^{-1}$.

After being reacted in the catalytic conversion zones 10 and 18 under suitable reaction conditions, the effluent gas stream will primarily comprise $H_2S$ and $SO_2$ in a molar ratio in excess of about 20:1. When operating the inventive process under the most economically desirable reaction conditions, the molar ratio of $H_2S$ to $SO_2$ in the effluent gas stream will typically be in excess of about 20:1 and will more preferably be in excess of about 50:1. The amount of $SO_2$ contained within the effluent gas stream will generally be less than about 2000 ppm and will more preferably be less than about 200 ppm. Thus, the level of $SO_2$ contained within the effluent gas stream is generally sufficiently low as to allow the $SO_2$ contained therein to be released to the atmosphere in full compliance with current environmental standards without further removal thereof being required.

Liquid sulfur from the condensers 12 and 20 that follow each of the catalytic conversion zones 10 and 18 is withdrawn from the modified sulfur recovery unit 49′ via lines 13 and 21. The condensers 12 and 20 are generally maintained at a temperature within the range of about $250°F$ to about $360°F$, and are preferably maintained at a temperature within the range of about $250°F$ to about $290°F$. The effluent gas stream, primarily comprising $H_2S$ and $SO_2$ in a molar ratio in excess of 20:1, is withdrawn from the modified sulfur recovery plant 49′ via line 22.

Although either of the aforementioned embodiments of the present invention may be used to recover sulfur from an acid gas containing $H_2S$, it is generally preferable to use the second embodiment when dealing with an acid gas feed that has a low $H_2S$ concentration, for example below about 30 mol-%, due to the inability of such an acid gas to support the self-sustaining combustion utilized in the first embodiment. In contrast, it is generally preferable, from an economic standpoint, to use the first embodiment of the present invention when dealing with an acid gas having a higher $H_2S$ concentration, for example in excess of about 30 mol-%, due to the economically unattractive number of conversion/condensation cycles that would be required to sufficiently reduce the sulfur content of the produced tail gas when operating the catalytic conversion zones within a desirable temperature range. Thus, the manner in which the present invention is operated will be determined primarily by the concentration of $H_2S$ and gas phase reduced sulfur constituents contained within the particular feed gas being processed.

Regardless of which embodiment of the present invention is utilized, the effluent gas streams, primarily comprising $H_2S$ and $SO_2$ in a molar ratio in excess of about 20:1, withdrawn from the sulfur recovery unit and the modified sulfur recovery unit are passed to at least one absorber bed wherein the reduced sulfur compounds (primarily $H_2S$) contained within the effluent gas streams are absorbed, thereby producing a tailgas that may be vented to the atmosphere in full compliance with current environmental standards. In the preferred embodiment of the present invention, at least two absorber beds are utilized in order that one bed may be regenerated during the period in which the second bed is absorbing, thereby creating a continuous absorption/regeneration cycle.

The absorber beds may contain any absorbent that is capable of absorbing $H_2S$ from the effluent gas stream. From an economic standpoint, the absorbent is preferably regenerable; and may either be regenerated to produce sulfur, $H_2S$, or $SO_2$. Examples of suitable absorbents which may be regenerated to produce sulfur and/or $H_2S$ that may be used in accordance with the present invention include regenerable aqueous amine or aqueous alkaline solutions and suspended metal oxide absorbents such as iron chelate, iron oxide, zinc oxide, or copper oxide suspended in aqueous alkaline solutions. Examples of suitable absorbents which may be regenerated to produce $SO_2$ that may be used in accordance with the present invention include solid metal absorbents such as zinc oxide, zinc titanate, zinc-vanadium pentoxide, zinc ferrite, copper oxide, copper aluminate, cupric ferrite, copper molybdate, iron oxide, and combination thereof supported on alumina, silica, titania, zirconia, and combinations thereof. These solid metal absorbents may also be promoted with various metals such as nickel, cobalt, iron, copper, and molybdenum. Among these absorbents, zinc oxide promoted with nickel is especially preferred.

The absorber beds may be operated at any absorption conditions under which substantially all of the $H_2S$ is being absorbed from the effluent gas stream, thereby typically producing an effluent containing less than 1 percent of the $H_2S$ in the absorber feed stream. Generally, the amount of reduced sulfur compounds contained in the effluent stream exiting the absorber beds will be less than about 200 ppm, and will preferably be less than about 100 ppm. The absorption conditions will vary widely depending upon the particular absorbent being utilized. Generally, however, the absorption temperature will be within the range of about 100°F to about 1200°F, and will preferably be within the range of about 200°F to about 1000°F; the absorption pressure will be within the range of about 0 psig to about 1000 psig, and will preferably be within the range of about 0.1 psig to about 100 psig; and the GHSV (gas hourly space velocity; cc/cc/hr) will be within the range of about 100 $hr^{-1}$ to about 2000 $hr^{-1}$, and will preferably be within the range of about 200 $hr^{-1}$ to about 1000 $hr^{-1}$.

When an absorber bed has become sulfided to the point that it is no longer effective in absorbing $H_2S$ from the effluent gas stream, the flow of the effluent gas stream over the absorber bed is interrupted and the absorber bed is regenerated. In the preferred embodiment of the present invention, wherein two or more absorber beds are being utilized, the flow of the effluent gas stream is switched from the sulfided absorber bed to a newly-regenerated absorber bed, and the sulfided absorber bed is subsequently regenerated. The absorber beds may be regenerated at any regeneration conditions under which the absorbent's capacity to absorb reduced sulfur compounds is restored. For those types of absorbents that produce sulfur and/or $H_2S$ upon regeneration, the regeneration temperature will generally be within the range of about 250°F to about 1400°F, and will preferably be within the range of about 300°F to about 1200°F; the regeneration pressure will be within the range of about 0 psig to about 30 psig, and will preferably be within the range of about 3 psig to about 15 psig; and the GHSV will be within the range of about 100 $hr^{-1}$ to about 1,000 $hr^{-1}$, and will preferably be within the range of about 200 $hr^{-1}$ to about 800 $hr^{-1}$. For those types of absorbents that produce $SO_2$ upon regeneration, the regeneration temperature will generally be within the range of about 100°F to about 1700°F, and will preferably be within the range of about 250°F to about 1500°F; the regeneration pressure will be within the range of about 0 psig to about 100 psig, and will preferably be within the range of about 0 psig to about 25 psig; and the GHSV will be within the range of about 100 $hr^{-1}$ to about 1,000 $hr^{-1}$, and will preferably be within the range of about 200 $hr^{-1}$ to about 800 $hr^{-1}$.

When an absorbent that produces $SO_2$ or $H_2S$ upon regeneration is utilized with the present invention, a preferred embodiment of the present invention is one in which the regeneration off-gas is introduced into the sulfur recovery unit for the purpose of supplying at least part of the $SO_2$ or $H_2S$ required for the primary Claus reaction.

Returning now to the embodiments of the present invention illustrated in FIGURES 1 and 2, the effluent gas streams withdrawn from the sulfur recovery unit 49 of Fig. 1 and the modified sulfur recovery unit 49′ of Fig. 2 are passed via line 22 to the absorber beds 28 and 29 wherein the reduced sulfur compounds (primarily $H_2S$) contained within the effluent gas streams are absorbed. The tailgas that is thereby produced is vented to the atmosphere via lines 30, 31 and 34. In the illustrated embodiment, the effluent gas stream is passed via lines 22 and 24 to the absorber bed 28 through control valve 26. After the reduced sulfur compounds contained within the effluent gas have been absorbed by the absorber bed 28, the tail gas is passed via line 30 through control valve 32 and vented to the atmosphere via line 34. Concurrently with this absorption step, the sulfided absorber bed 29 is being regenerated through contact with air and, optionally, $SO_2$ which is being passed via line 35 through the blower 37 and into the absorber bed 29 via lines 38, 40, and 31 and control valve 42. After contacting the sulfided absorber bed 29, the regeneration gases containing $SO_2$ are withdrawn via line 45 through control valve 46 and introduced via line 6 to the front of the sulfur recovery unit 49 of Fig. 1 or the modified sulfur recovery unit 49′ of Fig. 2. The $SO_2$-containing regeneration off-gas is thus used to supply at least a portion of the $SO_2$ that is utilized in the Claus reaction for the recovery of sulfur.

The following example is presented in further illustration of the invention.

6

## EXAMPLE I

A pilot plant was built to explore the technical feasibility of using off-ratio process operations to recover sulfur from acid gas streams (primarily comprising $H_2S$ and $CO_2$) generated at natural gasoline plants. Acid gas from two natural gasoline plants was processed through the pilot plant.

### Experimental Apparatus

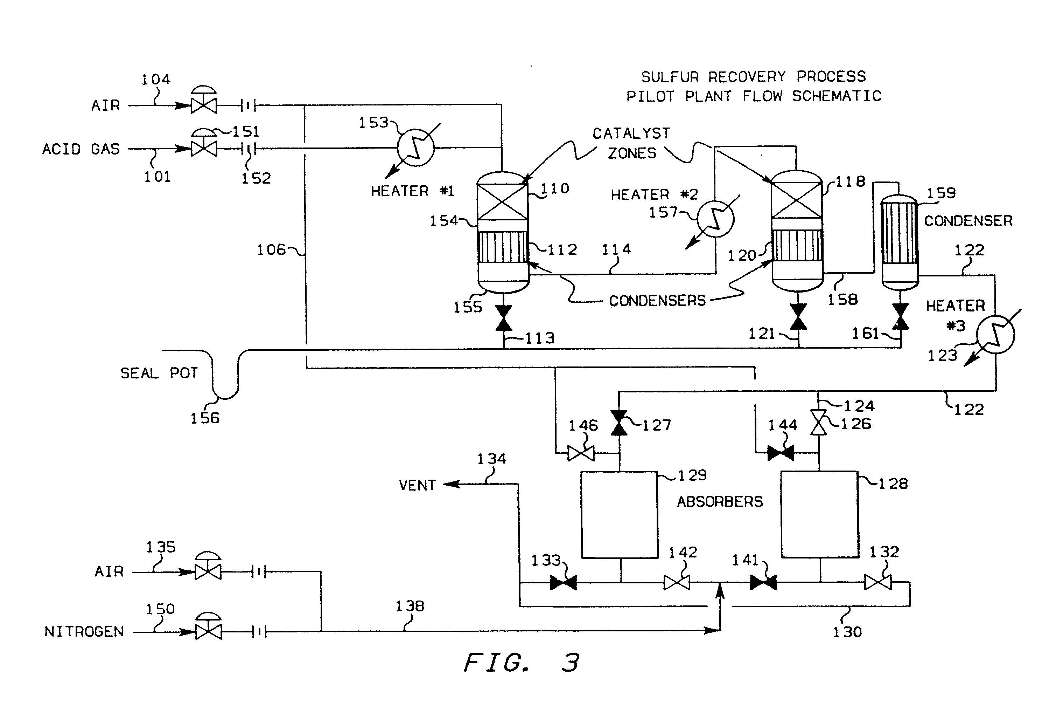

Although a number of configurations were used, the flow sheet shown in Figure 3 gives a schematic representation of the experimental apparatus used in the pilot plant example.

The unit basically consisted of:

two reactor vessels
two absorber vessels
three heaters
one incoming acid gas stream
two incoming air streams
one incoming nitrogen stream or a recirculation blower, around the regenerating absorber vessel)

The acid gas $H_2S$ concentration varied from 12 to 25 percent by volume. All typical trace contaminants were present in the acid gas due to the fact that this stream came from a functioning amine unit operating on crude-sour natural gas streams.

Reviewing the flow of gas through the unit: Acid gas 101 flowed from an amine still (not shown) through a free water knock-out (not shown) through a metering valve 151, and then through an orifice meter 152. The acid gas then passed through a heater 153, where the temperature adjustment ranged from 300 to 400° F. The heated acid gas stream joined the regeneration gas stream 106 and the inlet air stream 104 just prior to entering the first converter bed 110 contained in vessel 154. The temperature of the commingled streams averaged 450° F. The combined flow going through the converter bed in vessel 154 gave an average gas hourly space velocity of 2800 $hr^{-1}$. Converter bed temperatures ranged from an average 570° F at the top to 850° F near the bottom of the bed 110.

The initial $H_2S:SO_2$ ratio described earlier must be modified to account for the fact that in this example approximately 33% of the oxygen went to partially oxidize the hydrocarbon. Thus the oxygen for $H_2S$ oxidation was 0.67z and the initial ratio of $H_2S:SO_2$ was:

$$R = (x - \frac{0.67z}{1.5}) / (y + \frac{0.67z}{1.5})$$

where x = moles $H_2S$
y = moles $SO_2$
z = moles $O_2$

The initial $H_2S$ to $SO_2$ ratio entering the first bed 110 was approximately 2.5 to 1; while the ratio for the stream 114 exiting the bed and entering the second converter 118 was approximately 4 to 1.

The stream exiting the first converter 110 passed through a pressurized boiling water heat exchanger 112 where the temperature of the gas was cooled to approximately 380° F. A portion of the sulfur product condensed to liquid form, and dropped into a sulfur storage chamber 155 at the lower end of the first converter 154. Periodically, the collected sulfur was drained through a seal pot 156 and weighed to establish the sulfur production rate.

The gas stream 114 with entrained sulfur (either as uncondensed sulfur or small sulfur droplets) passed through a heater 157, where the temperature of the stream was raised to approximately 400° F. Optionally, although not used in this test series, an additional amount of air can be metered into the process stream just prior to entry into the second converter bed 118.

The temperature of the gas stream in the second converted bed 118 ranged from 480° F near the top of the bed to 500° F at the exit. The ratio of $H_2S$ to $SO_2$ at the exit of the bed averaging about 90:1.

The gas exiting the second converter bed 118 passed through a boiling water cooled condenser 120, where the temperature of the gas was reduced to approximately 365° F. The cooled gas 158 exited to another boiling water cooled condenser 159. The sulfur product condensed from the gas streams was collected in the bottom of the vessels, until manually drained 113, 121, 161, through a seal pot 156.

The gas exiting the final condenser 159 was at a temperature of approximately 275° F, effectively condensing and capturing the sulfur product 161.

The process gas stream 122 then passed through a third process heater 123 where the temperature of the gas was heated to a range of 700 to 1000° F.

The high temperature gas stream 122 then passed through one of two zinc-based $H_2S$-selective chemisorbent beds 128. The reaction within the chemisorbent can be represented as follows:

inerts + $ZnO$ + $H_2S$ → $ZnS$ + $H_2O$ + inerts

This exothermic chemisorbent process step, effectively removed the reduced $H_2S$ in the process stream. The gas 130 exiting the chemisorbent bed 128 was released 134 to the atmosphere.

The two chemisorbent vessels operated in tandem, one bed 128 chemisorbing (as described above) the other 129 undergoing regeneration. The regeneration process involved the introduction of oxygen containing gas 138 to a hot bed 129 of reduced chemisorbent material. The exothermic reacton which ensued can be described as follows:

inerts + $ZnS$ + 1.5 $O_2$ → $ZnO$ + $SO_2$ + inerts

The gas stream 106 exiting the chemisorbent bed 129 undergoing regeneration, was routed to the front of the process and into the first converter bed 110 in reactor vessel 154. There the $SO_2$ was converted to elemental sulfur as described above.

Temperatures in the regenerating vessel 129 ranged from 150° F to 1700° F. The gas hourly space velocity during the regeneration ranged from 300 $hr^{-1}$ to 600 $hr^{-1}$, with an average of $480^{-1}$.

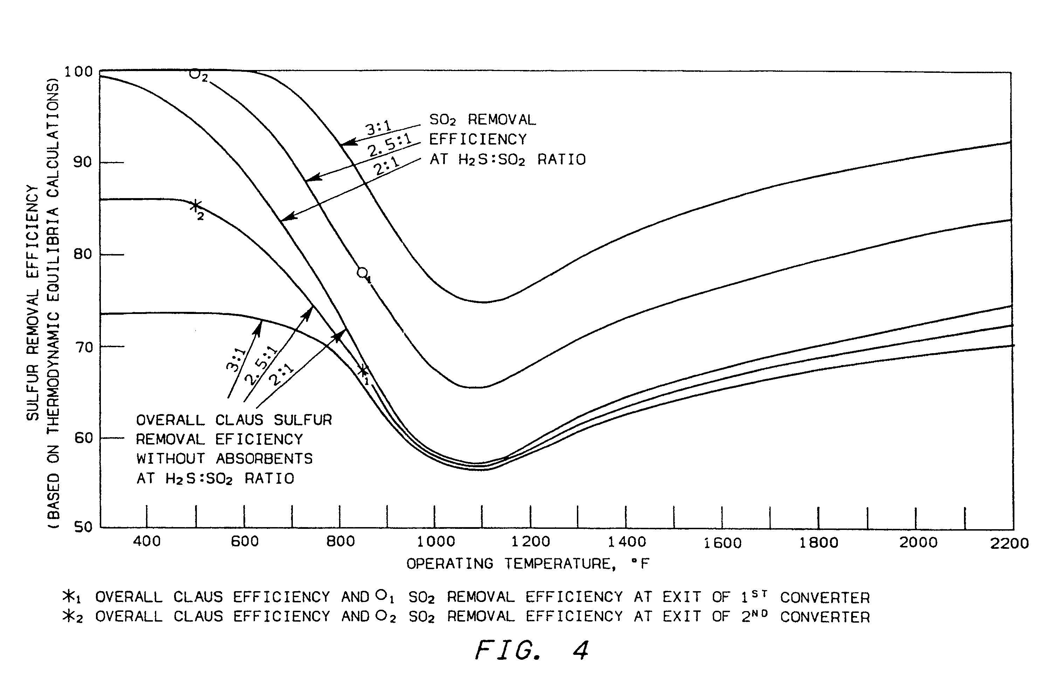

Data for the 6 1/2-hour run are shown in Table 1, with the results being plotted in Figure 4 as

$$\text{Overall Claus Efficiency} = \frac{(H_2S + SO_2) \text{ in} - (H_2S + SO_2) \text{ out}}{(H_2S + SO_2) \text{ in}}$$

$$\text{SO}_2 \text{ Removal Efficiency} = \frac{(SO_2 + .67/1.5 \ O_2) - (SO_2) \text{ out}}{(SO_2 + .67/1.5 \ O_2)} \text{ x } 100$$

with an inlet ratio of $H_2S$:$SO_2$ equal to 2.5:1.

The Overall Claus Efficiency and $SO_2$ Removal Efficiency are plotted for the first converter and for the two converters combined at 850° F (the exit temperature of the first bed) and at 500° F (the exit temperature of the second bed), respectively.

A review of the results set forth in Figure 4 discloses that the $SO_2$ Removal Efficiency corresponds to the overall sulfur removal efficiency of the combination of the Sulfur Recovery Unit and the absorber beds. Additionally, the curves plotted in Figure 4 demonstrate the improved sulfur removal efficiency obtained by the process of the present invention versus the typical stoichiometric Claus reaction.

The reference curves contained in Fig. 4 were plotted from a NASA Equilibrium program, which is based upon equilibrium data taken from the JANAF Tables, National Bureau of Standards, Commerce Department, 1971, Report No. 16955.

Table 1

| Basis:100 moles acid gas | | | | | | | | | | |
|---|---|---|---|---|---|---|---|---|---|---|
| Stream No. | 101 | 104 | 106 | 101 + 104 + 106 | 113 | 114 | 121 | 158 | 122 | 161 |
| Description | Acid Gas Inlet | Air To First Reactor | Regen Stream To First Reactor | First Reactor Feed | First Reactor Product | Second Reactor Feed | Second Reactor Product | Second Reactor Exit | #12 Feed to Absorber | Third Condenser Product |
| $H_2S$ | 20.03 | 0.00 | 0.00 | 20.03 | -- | 6.06 | -- | 3.11 | 3.11 | -- |
| $CO_2$ | 75.78 | 0.00 | 0.00 | 75.78 | -- | 77.21 | -- | 77.21 | 77.21 | -- |
| $N_2$ | 0.40 | 29.76 | 286.08 | 316.24 | -- | 316.24 | -- | 316.24 | 316.24 | -- |
| $O_2$ | 0.00 | 7.81 | 0.00 | 7.81 | -- | 0.00 | -- | 0.00 | 0.00 | -- |
| $SO_2$ | 0.00 | 0.00 | 3.18 | 3.18 | -- | 1.51 | -- | 0.04 | 0.04 | -- |
| $H_2O$ | 1.00 | 0.00 | 0.00 | 1.00 | -- | 17.11 | -- | 20.06 | 20.06 | -- |
| Liq S | 0.00 | 0.00 | 0.00 | 0.00 | 10.24 | 0.00 | 5.04 | 0.00 | 0.00 | 4.50 |
| Vap S | 0.00 | 0.00 | 0.00 | 0.00 | -- | 5.40 | -- | 4.78 | 0.28 | -- |
| Total Hydrocarbon | 2.79 | 0.00 | 0.00 | 2.79 | -- | 2.07 | -- | 2.075 | 2.07 | -- |
| Total | 100.00 | 37.57 | 289.26 | 426.83 | 10.24 | 425.60 | 5.04 | 423.51 | 419.01 | 4.50 |
| Composition, Mole % | | | | | | | | | | |
| $H_2S$ | 20.03 | -- | -- | 4.69 | -- | 1.42 | -- | 0.73 | 0.74 | -- |
| $CO_2$ | 75.78 | -- | -- | 17.75 | -- | 18.14 | -- | 18.23 | 18.43 | -- |
| $N_2$ | 0.40 | 79.2 | 98.9 | 74.10 | -- | 74.30 | -- | 74.67 | 75.47 | -- |
| $O_2$ | -- | 20.8 | -- | 1.83 | -- | 0.00 | -- | 0.00 | 0.00 | -- |
| $SO_2$ | -- | -- | 1.1 | 0.75 | -- | 0.36 | -- | 0.01 | 0.01 | -- |
| $H_2O$ | 1.00 | -- | -- | 0.23 | -- | 4.02 | -- | 4.74 | 4.79 | -- |
| S1 (S8) | -- | -- | -- | 0.00 | 100.0 | 1.27 | 100.0 | 1.13 | 0.07 | 100.0 |
| tal Hydrocarbon | 2.79 | -- | -- | 0.65 | -- | 0.49 | -- | 0.49 | 0.49 | -- |
| Avg MW | 41.32 | 28.85 | -- | 31.48 | -- | 31.62 | -- | 31.67 | 32.01 | -- |
| Temp., F | 60 | 30 | 740 | 500 | -- | 375 | -- | 370 | 272 | -- |
| SCFH actual | 175.42 | 65.91 | 507.7 | 749.2 | -- | 747.0 | -- | 743.3 | 735.5 | -- |

While this invention has been described in detail for the purpose of illustration, it is not to be construed as limited thereby but is intended to cover all reasonable variations and modifications that are possible by those skilled in the art within the scope of the described invention and the appended claims.

**Claims**

1. A process for recovering elemental sulfur from a gas containing $H_2S$ comprising the steps of: burning said gas containing $H_2S$ within a sulfur recovery unit in the presence of oxygen to convert a portion of said gas containing $H_2S$ to $SO_2$, the amount of said oxygen within said sulfur recovery unit being controlled to insure an initial molar ratio of $H_2S$ to $SO_2$ within said sulfur recovery unit in excess of 2:1; and, reacting the remaining portion of said gas containing $H_2S$ with said $SO_2$ within said sulfur recovery unit under suitable reaction conditions to produce sulfur and an effluent gas stream comprising $H_2S$, $SO_2$ and stream, wherein the molar ratio of $H_2S$ to $SO_2$ within said effluent gas stream is in excess of about 20:1.

2. A process for recovering elemental sulfur from a gas containing $H_2S$ comprising the steps of: introducing said gas containing $H_2S$ and at least one oxygen-containing gas selected from air, molecular oxygen and $SO_2$ into a modified sulfur recovery unit, wherein the amount of said oxygen-containing gas introduced into said modified sulfur recovery unit is controlled to insure an initial molar ratio of $H_2S$ to $SO_2$ within said modified sulfur recovery unit in excess of 2:1; and reacting said gas containing $H_2S$ with said oxygen-containing gas within said modified sulfur recovery unit under suitable reaction conditions to produce sulfur and an effluent gas stream comprising $H_2S$, $SO_2$, and steam, wherein the molar ratio of $H_2S$ to $SO_2$ within said effluent gas stream is in excess of about 20:1.

3. The process of claim 1 or 2 wherein said initial molar ratio of $H_2S$ to $SO_2$ within said sulfur recovery unit is within the range of 2.1:1 to 2.5:1.

4. The process of claim 3 wherein said initial molar ratio of $H_2S$ to $SO_2$ within said sulfur recovery unit is within the range of 2.2:1 to 2.4:1.

5. The process of any of the preceding claims wherein said molar ratio of $H_2S$ to $SO_2$ within said effluent gas stream is in excess of about 50:1.

6. The process of any of the preceding claims wherein said reaction conditions comprise a reaction temperature within the range of 1149 to 649 °C, a reaction pressure within the range of 0 to 207 kPa gauge and a gas hourly space volume within the range of 200 to 10,000 $h^{-1}$.

7. The process of claim 6 wherein said reaction temperature is within the range of 204 to 482 °C, said reaction pressure is within the range of 13.8 to 103.5 kPa gauge and said gas hourly space volume is within the range of 750 to 4,000 $h^{-1}$.

8. The process of any of the preceding claims further comprising step of: contacting said effluent gas stream with a regenerable, reduced-sulfur absorbent that is capable of removing substantially all of the $H_2S$ remaining in said effluent gas stream, thereby producing a tail gas comprising less than 100 ppm of reduced sulfur compounds and less than 2000 ppm sulfur dioxide which may be vented to the atmosphere.

9. The process of claim 8 wherein said regenerable, reduced-sulfur absorbent comprises a solid zinc oxide or a zinc oxide based material on an alumina, silica, or zirconia support structure.

10. The process of claim 9 wherein said solid zinc oxide or zinc oxide based material further comprises at least one promoter selected from nickel, cobalt, iron, copper, and molybdenum.

11. The process of claim 10 wherein said promoter is nickel.

12. The process of claim 8 further comprising the steps of: periodically interrupting the contact of said effluent gas stream with said regenerable, reduced-sulfur absorbent; and contacting said regenerable, reduced-sulfur absorbent, after the contact with said effluent gas stream has been interrupted, with an oxygen-containing gas under regeneration conditions, thereby regenerating said regenerable, reduced-sulfur absorbent and producing an off-gas comprising $SO_2$.

13. The process of claim 12 further comprising the step of: introducing said off-gas comprising $SO_2$ to said first catalytic conversion zone, thereby providing at least a portion of the $SO_2$ required for said reaction with $H_2S$.

14. The process of claim 12 wherein said oxygen-containing gas is air.

15. The process of claim 12 wherein said regeneration conditions comprise a regeneration temperature within the range of 37.8 to 927 °C, a regeneration pressure within the range of 0 to 690 kPa gauge and a gas hourly space volume within the range of 100 to 1,000 $h^{-1}$.

16. The process of claim 15 wherein said regeneration temperature is within the range of 121 to 816 °C, said regeneration pressure is within the range of 0 to 173 kPa gauge and said gas hourly space volume is within the range of 200 to 800 h$^{-1}$.

FIG. 1

FIG. 2

EP 0 418 803 A1

SULFUR RECOVERY PROCESS
PILOT PLANT FLOW SCHEMATIC

FIG. 3

*1 OVERALL CLAUS EFFICIENCY AND O1 SO2 REMOVAL EFFICIENCY AT EXIT OF 1ST CONVERTER
*2 OVERALL CLAUS EFFICIENCY AND O2 SO2 REMOVAL EFFICIENCY AT EXIT OF 2ND CONVERTER

*FIG. 4*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 159 730  (SHELL INT. RES.)<br>* the whole document *<br>– – – | 1-5,8-16 | C 01 B 17/04 |
| X | EP-A-0 242 006  (VEG-GASINST.)<br>* page 18, lines 15 - 19; claims 1-4; figures 1, 3C *<br>– – – | 1-5,8,12,<br>14 | |
| A | CHEMICAL ABSTRACTS, vol. 105, no. 16, October 1986 Columbus, Ohio, USA M.H. Reed et al.: "ELSE tail gas clean-up process." page 145; ref. no. 136368<br>* abstract *<br>– – – | 8 | |
| A | EP-A-0 256 741  (AMOCO CORP.)<br>– – – – – | | |
| | | | **TECHNICAL FIELDS SEARCHED (Int. Cl.5)** |
| | | | C 01 B 17/00 |

The present search report has been drawn up for all claims

| Place of search | Date of completion of search | Examiner |
|---|---|---|
| The Hague | 12 December 90 | ZALM W.E. |